# EUROPEAN PATENT SPECIFICATION

(11) **EP 0 490 888 B1**
(45) Date of publication and mention of the grant of the patent: **18.05.1994**
(21) Application number: 89909697.8
(22) Date of filing: 08.09.1989
(51) Int. Cl.: C08F 10/00, C08F 4/642, C08F 4/60

(54) **CATALYST AND PROCESS FOR THE POLYMERIZATION OF OLEFINS**
KATALYSATOR UND VERFAHREN ZUR POLYMERISIERUNG VON OLEFINEN
CATALYSEUR ET PROCEDE DE POLYMERISATION D'OLEFINES

(43) Date of publication of application: 24.06.1992
(73) Proprietor: FINA RESEARCH S.A., B-7181 Seneffe (Feluy) (BE)
(72) Inventor: HASPESLAGH, Luc, B-1710 Dilbeek (BE); MAZIERS, Eric, B-7180 Ecaussines (BE)
(86) International application number: BE8900043
(87) International publication number: WO9103500

(56) References cited:
- EP-A- 0 284 708
- EP-A- 0 316 155
- EP-A- 0 351 392
- CLB Chemie für Labor und Betrieb, Vol 38, No 8, 1987, W Kaminsky et al: 'Isotaktisches Polypropylen durch homogene Ziegler-Natta-Katalyse', see page 398-402
- Chemistry Letters, vol 1989, Takaya Mise et al: 'Excellent Stereoregular Isotactic Polymerizations of Propylene with C2-Symmetric Silylene-Bridged Metallocene Catalysts', see page 1853-1856
- Journal of the American Chemical Society, vol 110, 1988, John A Ewen et al: 'Syndiospecific Propylene Polymerizations with Group 4 Metallocenes', see page 6255-6256
- Chemical Abstracts, vol 105, no 24, 15 December 1986, (Columbus, Ohio, US), Kaminsky, Walter et al: 'Olefin polymerization with highly active soluble zirconium compounds using aluminoxane as cocatalyst', see page 2, abstract 209428b
- Polymer Bulletin, vol 21, 1989, Bernhard Rieger and James C W Chien: 'Anisotactic polypropylenes produced with a zirconocene-methylalumoxane catalyst: solid state properties and microstructure', see page 159-163

## Description

The present invention relates to a catalyst and a process for the polymerization and copolymerization of olefins, particularly useful for the polymerization of ethylene and propylene and for the copolymerization of ethylene or propylene with other olefins having 3 or more carbon atoms including alpha-olefins such as, for example, propylene, isobutene, 1-butene, 1-pentene, 1-hexene, 4-methyl-1-pentene, 1-heptene, 1-octene, or cyclic olefins such as norbornene.

The invention is particularly concerned with the polymerization of propylene to form isotactic or syndiotactic polypropylene.

The invention further relates to a homogeneous catalyst system comprising a transition metal-containing catalyst component and an alumoxane as cocatalyst.

Traditionally, olefins have been polymerized or copolymerized in the presence of hydrocarbon-insoluble catalyst systems comprising a transition metal compound and an aluminium alkyl. More recently, active homogeneous catalyst systems comprising a bis(cyclopentadienyl) titanium dialkyl or a bis(cyclopentadienyl) zirconium dialkyl, an aluminium trialkyl and water have been found to be useful for the polymerization of ethylene.

European Patent n° 35,242 discloses a process for preparing ethylene polymers and atactic propylene polymers in the presence of a halogen-free Ziegler catalyst system comprising (1) a cyclopentadienyl compound of the formula (cyclopentadienyl)ₙMeY₄₋ₙ in which n is an integer from 1 to 4, Me is a transition metal, especially zirconium, and Y is either hydrogen, a C₁-C₅ alkyl or metallo alkyl group or a radical having the general formula CH₂AlR₂, CH₂CH₂AlR₂ or CH₂CH(AlR₂)₂ in which R represents a C₁-C₅ alkyl or metallo alkyl group, and (2) an alumoxane. Additional teachings of homogeneous catalyst systems comprising a metallocene and alumoxane are European Patent n° 69,951 and U.S Patent 4,404,344.

An advantage of the metallocene-alumoxane homogeneous catalyst system is the good activity obtained for olefin polymerization. Nevertheless, the catalyst systems suffer from a disadvantage, that is, the ratio of alumoxane to metallocene is high, for example, in the order of 3,000 to 1 or greater. Such voluminous amounts of alumoxane would require extensive treatment of polymer product obtained in order to remove the undesirable aluminium.

It has already been proposed in International Application WO87/02991 to reduce the alumoxane to transition metal ratio by using a heterogeneous supported catalyst system comprising both a metallocene and a non-metallocene compound, the latter not requiring alumoxane.

It would thus be highly desirable to provide a metallocene-based catalyst which is commercially useful for the polymerisation of olefins wherein the aluminium to transition metal ratio is reduced compared with the known homogeneous systems.

In accordance with the present invention, there is provided a homogeneous catalyst system for olefin polymerization and copolymerization, said system comprising (i) a metallocene transition metal catalyst and (ii) an alumoxane cocatalyst, said alumoxane being provided under the form of a solution of at least 20 wt%.

In accordance with a preferred embodiment of the invention, said catalyst system for olefin polymerization and copolymerization is provided with a molar ratio alumoxane/transition metal compound lower than 2000.

In another embodiment of this invention there is provided a process for the (co)polymerization of olefins in the presence of the new catalyst system. The process, by means of the catalyst, provides the capability of producing polymers with a higher yield with respect to the alumoxane. The process also provides the capability of producing polymers using a lower alumoxane/transition metal compound molar ratio.

The alumoxanes employed as cocatalyst in the system are themselves the reaction products of an aluminium trialkyl with water.

The alumoxanes are well known in the art and comprise oligomeric, linear and/or cyclic alkyl alumoxanes represented by the formulae : R-(AlR-O)ₙ-AlR₂ for oligomeric, linear alumoxanes, and (-AlR-O)ₘ for oligomeric, cyclic alumoxanes, wherein n is 1-40, preferably 1-20, m is 3-40, preferably 3-20 and R is a C₁-C₈ alkyl group and preferably methyl. Generally, in the preparation of alumoxanes from, for example, trimethylaluminium and water, a mixture of linear and cyclic compounds is obtained.

The alumoxanes can be prepared in a variety of ways. Preferably, they are prepared by contacting water with a solution of aluminium trialkyl, such as, for example, trimethylaluminium, in a suitable organic solvent such as benzene, toluene or xylene. For example, the aluminium alkyl is treated with water in the form of a moist solvent. In a preferred method, there is used alumoxane under the form of a solution of at least 20 wt%, most preferably a near-saturated solution.

The present invention employs at least one metallocene compound in the composition of the catalyst system. A metallocene or cyclopentadienide is an organometallic coordination compound which is a cyclopentadienyl derivative of a transition metal. The metallocenes usefully employed in accordance with this invention contain one, two or three cyclopentadiene rings or derivatives thereof, preferably two. The transition metal is selected from Group 4 or 5 (formerly known as IVB or VB) metals, preferably titanium, zirconium, hafnium and vanadium, and especially titanium and zirconium. The cyclopentadienyl ring can be unsubstituted or contain substituents such as, for example, hydrocarbyl substituents.

These metallocenes can be represented by the general formulae :

(Cp)ₘRₙMQₖ

wherein each Cp is the same or different and is a cyclopentadienyl or a cyclopentadienyl substituted by one or more hydrocarbyl radical such as alkyl, alkenyl, aryl, arylalkyl or alkylaryl radical having from 1 to 20 carbon atoms, R is a structural bridge between two Cp rings, M is a transition metal selected from groups 4 or 5, each Q is the same or different and is any substituent not interfering with the active (Cp)ₘRₙM part of the metallocene, m=1-3, n=0 or 1, and k is such that the sum of m+k is equal to the oxidation state of M.

Typical structural bridges R between Cp rings include for example alkylene radicals having from 1 to 4 carbon atoms, and heteroatomic bridges such as dialkyl germanium or silicium, alkyl phosphine or alkyl amine. Typical possibilities of Q include hydrides or hydrocarbyl groups having from 1 to 20 carbon atoms or halogens or alkenyl groups having from 2 to 20 carbon atoms.

Preferred metallocene catalysts are those disclosed in EP-A-0 351 392, wherein m=2 and n=1, and wherein the cyclopentadienyl rings are sterically differently substituted, their use leading to the formation of substantially syndiotactic polymers.

The conditions under which the polymerization or copolymerization of olefins may be conducted are known in the art. The polymerization may be conducted by a solution, slurry, or bulk technique, generally at a temperature in the range of about 0°-160°C or even higher, and under atmospheric, subatmospheric, or superatmospheric pressure conditions, and conventional polymerization adjuvants, such as hydrogen may be employed if desired. It is generally preferred to use the catalyst composition at a concentration such as to provide about 0.000001-0.005%, most preferably about 0.00001-0.0003%, by weight of transition metal based on the weight of monomer(s), in the polymerization of ethylene or propylene, alone or with one or more higher olefins.

Examples of polymerization procedure that may be used are disclosed in European Patent Application n° 284.708, incorporated herein by reference.

Before the actual polymerization step, a prepolymerization step may be provided. Prepolymerization conditions are known in the art, as described for example in European Patent Application n° 279.153.

The polymers produced by the catalyst and process of this present invention are capable of being fabricated into a wide variety of articles, as is known for homopolymers of ethylene or propylene and copolymers thereof.

The invention will be further described by way of the following examples.

### Example 1

a. Synthesis of the catalyst
Isopropyl (or dimethyl ANSA(1)) fluorenyl cyclopentadienyl zirconium dichloride was prepared according to Method B disclosed in EP-A-0 351 392.
b. Preparation of the catalyst system
In a glove box under argon atmosphere, the catalyst system was prepared by dissolving 2 mg of the hereabove catalyst in 0.45 ml of a 36.6 wt% solution of methylalumoxane in toluene, resulting in a bright pink solution. Thus, the composition of said system was as follows :

| | | |
|---|---|---|
| - catalyst | 2 mg | Al/Zr = 500 mole/mole |
| - cocatalyst | 132.0 mg | |
| - toluene | 229 mg | |

The catalyst system was prepared 20 minutes before its being used (precontacting time).
c. Polymerization procedure
A 4.5 1 stainless steel reactor equipped with an inclined blade stirrer and with appropriate inlets for monomer and catalyst system feeding was purged with nitrogen and cooled to about 15°C by flushing with 0.5 l of liquid propylene.
The reactor was loaded with 1.5 l of liquid propylene at 15°C, and the stirrer was rotated at 250 rpm.
The catalyst system was injected and flushed into the reactor with another 1.5 l of liquid propylene at 15°C.
The temperature of the reactor was then increased to 60°C and the polymerization reaction was continued for one hour. The reaction was stopped by cooling to 0°C and venting off any unreacted monomer.
A polypropylene fluff having nicely spherical particles was collected as a wet powder and dried overnight at 50°C under vacuum, yielding 306.7 g of powder.
d. Product characteristics

| | | |
|---|---|---|
| - melt flow index | 5.20 g/10 min | ASTM D1238 (2.16 kg/190°C) |
| - bulk density | 0.21 g/cm³ | ASTM D1898 |

### Example 2

The procedure of example 1 was repeated identically with the exception that 0.5 ml of a 30 wt% solution of methylalumoxane was used. Thus, the composition of the catalyst system was as follows :

| | | |
|---|---|---|
| - catalyst | 2 mg | Al/Zr = 500 mole/mole |
| - cocatalyst | 132.0 mg | |
| - toluene | 308 mg | |

The yield was of 307.4 g of dry polypropylene fluff (not significantly different from that of example 1) having a melt flow index of 4.43 g/10 min and a bulk density of 0.23 g/cm³.

### Comparative example A

The procedure of example 1 was repeated identically with the exception that 1.5 ml of a 10 wt% solution of methylalumoxane was used. Thus, the composition of the catalyst system was as follows :

| | | |
|---|---|---|
| - catalyst | 2 mg | Al/Zr = 500 mole/mole |
| - cocatalyst | 132.0 mg | |
| - toluene | 1188 mg | |

The yield was of 151.0 g of dry polypropylene fluff having a melt flow index of 4.40 g/10 min and a bulk density of 0.19 g/cm³.

### Examples 3 to 6 (36% MAO) and comparative examples B to E (10% MAO)

The procedure of example 1 was repeated identically with the exceptions as stated in the Table, which also states the products characteristics. The Table also contains data relating to examples 1, 2 and A for convenience.

**Table**

| Ex. n° | Cat. mg | Cocat. mg | Toluene mg | Al/Zr mol/mol | Yield g | MFI g/10 min | d g/cm³ |
|---|---|---|---|---|---|---|---|
| 1 | 2 | 132 | 229 | 500 | 153.3 | 5.20 | 0.21 |
| 2 | 2 | 132 | 308 | 500 | 153.7 | 4.43 | 0.23 |
| A | 2 | 132 | 1188 | 500 | 75.5 | 4.40 | 0.19 |
| 3 | 2 | 264 | 458 | 1000 | 193.0 | 4.00 | 0.35 |
| B | 2 | 264 | 2376 | 1000 | 127.1 | 3.73 | 0.18 |
| 4 | 3 | 367 | 636 | 930 | 185.2 | 3.68 | 0.23 |
| C | 3 | 396 | 3564 | 1000 | 144.1 | 3.91 | 0.19 |
| 5 | 2 | 367 | 636 | 1400 | 240.0 | 4.37 | 0.24 |
| D | 2 | 396 | 3564 | 1500 | 196.2 | 3.55 | 0.25 |
| 6 | 2 | 792 | 1374 | 3000 | 274.6 | 3.28 | 0.21 |
| E | 2 | 792 | 7128 | 3000 | 211.1 | 3.42 | 0.32 |

It can be seen that lower Al/Zr ratios may be used favourably when concentrated methylalumoxane solutions are employed.

## Claims

1. Use of an alumoxane solution containing at least 20 wt % of alumoxane as cocatalyst for the polymerization or copolymerization of olefins with a homogeneous metallocene-type catalyst of general formula (Cp)ₘRₙMQₖ wherein each Cp is the same or different and is a cyclopentadienyl or a cyclopentadienyl substituted by one or more hydrocarbyl radical such as alkyl, alkenyl, aryl, arylalkyl or alkylaryl radical having from 1 to 20 carbon atoms, R is a structural bridge between two Cp rings, M is a transition metal selected from groups 4 or 5, each Q is the same or different and is a hydride or a hydrocarbyl group having from 1 to 20 carbon atoms or an alkenyl group having from 2 to 20 carbon atoms or a halogen, m=1-3, n=0 or 1, and k is such that the sum of m+k is equal to the oxidation state of M.

2. Use of an alumoxane solution according to claim 1, characterized in that the molar ratio alumoxane/catalyst is lower than 2000.

3. Use of an alumoxane solution according to claim 2, characterized in that the molar ratio alumoxane/catalyst is lower than 1000.

4. Use of an alumoxane solution according to any one of the preceeding claims, characterized in that the alumoxane is methylalumoxane.

5. Homogeneous catalyst system for olefin polymerization and copolymerization, said system comprising (i) a metallocene-type catalyst of general formula (Cp)ₘRₙMQₖ wherein each Cp is the same or different and is a cyclopentadienyl or a cyclopentadienyl substituted by one or more hydrocarbyl radical such as alkyl, alkenyl, aryl, arylalkyl or alkylaryl radical having from 1 to 20 carbon atoms, R is a structural bridge between two Cp rings, M is a transition metal selected from groups 4 or 5, each Q is the same or different and is a hydride or a hydrocarbyl group having from 1 to 20 carbon atoms or an alkenyl group having from 2 to 20 carbon atoms or a halogen, m=1-3, n=0 or 1, and k is such that the sum of m+k is equal to the oxidation state of M, and (ii) an alumoxane cocatalyst, said alumoxane being provided under the form of a solution of at least 20 wt%.

6. Homogeneous catalyst system according to claim 5, characterized in that the molar ratio alumoxane/catalyst is lower than 2000.

7. Homogeneous catalyst system according to claim 6, characterized in that the molar ratio alumoxane/catalyst is lower than 1000.

8. Homogeneous catalyst system according to any one of claims 5, 6 or 7, characterized in that the alumoxane is methylalumoxane.

9. Process for producing a homogeneous catalyst system for olefin polymerization and copolymerization, said system comprising (i) a metallocene-type catalyst of general formula (Cp)ₘRₙMQₖ wherein each Cp is the same or different and is a cyclopentadienyl or a cyclopentadienyl substituted by one or more hydrocarbyl radical such as alkyl, alkenyl, aryl, arylalkyl or alkylaryl radical having from 1 to 20 carbon atoms, R is a structural bridge between two Cp rings, M is a transition metal selected from groups 4 or 5, each Q is the same or different and is a hydride or a hydrocarbyl group having from 1 to 20 carbon atoms or an alkenyl group having from 2 to 20 carbon atoms or a halogen, m=1-3, n=0 or 1, and k is such that the sum of m+k is equal to the oxidation state of M, and (ii) an alumoxane cocatalyst, characterized in that said alumoxane is provided under the form of a solution of at least 20 wt%.

10. Process according to claim 9, wherein the molar ratio alumoxane/catalyst is lower than 2000.

11. Process according to claim 10, wherein the molar ratio alumoxane/catalyst is lower than 1000.

12. Process according to any one of claims 9, 10 or 11, wherein the alumoxane is methylalumoxane.

13. Process for the polymerization or copolymerization of olefins in the presence of a catalyst system comprising (i) a metallocene-type catalyst of general formula (Cp)ₘRₙMQₖ wherein each Cp is the same or different and is a cyclopentadienyl or a cyclopentadienyl substituted by one or more hydrocarbyl radical such as alkyl, alkenyl, aryl, arylalkyl or alkylaryl radical having from 1 to 20 carbon atoms, R is a structural bridge between two Cp rings, M is a transition metal selected from groups 4 or 5, each Q is the same or different and is a hydride or a hydrocarbyl group having from 1 to 20 carbon atoms or an alkenyl group having from 2 to 20 carbon atoms or a halogen, m=1-3, n=0 or 1, and k is such that the sum of m+k is equal to the oxidation state of M, and (ii) an alumoxane cocatalyst, characterized in that said alumoxane is provided under the form of a solution of at least 20 wt%.

14. Process according to claim 13, wherein the molar ratio alumoxane/catalyst is lower than 2000.

15. Process according to claim 14, wherein the molar ratio alumoxane/catalyst is lower than 1000.

16. Process according to any one of claims 13, 14 or 15, wherein the alumoxane is methylalumoxane.

17. Process according to any one of claims 13 to 16, when applied to the polymerization of propylene.

## Patentansprüche

1. Verwendung einer Alumoxan-Lösung, enthaltend mindestens 20 Gew.-% Alumoxan als Cokatalysator für die Polymerisation oder Copolymerisation von Olefinen mit einem homogenen Metallocen-Katalysator der allgemeinen Formel (Cp)ₘRₙMQₖ, worin jedes Cp gleich oder verschieden und ein Cyclopentadienyl oder ein Cyclopentadienyl, substituiert durch einen oder mehrere Kohlenwasserstoffreste ist, wie Alkyl-, Alkenyl-, Aryl-, Arylalkyl- oder Alkylarylrest, mit 1 bis 20 Kohlenstoffatomen, R eine strukturelle Brücke zwischen zwei Cp-Ringen ist, M ein Übergangsmetall ist, ausgewählt aus den Gruppen 4 oder 5, jedes Q gleich oder verschieden und ein Hydrid oder eine Kohlenwasserstoffgruppe mit 1 bis 20 Kohlenstoffatomen oder eine Alkenylgruppe mit 2 bis 20 Kohlenstoffatomen oder ein Halogen ist, m = 1 bis 3, n = 0 oder 1 und k derart ist, daß die Summe von m+k gleich dem Oxidationszustand von M ist.

2. Verwendung einer Alumoxan-Lösung nach Anspruch 1, dadurch gekennzeichnet, daß das molare Verhältnis Alumoxan/Katalysator kleiner als 2000 ist.

3. Verwendung einer Alumoxan-Lösung nach Anspruch 2, dadurch gekennzeichnet, daß das molare Verhältnis Alumoxan/Katalysator kleiner als 1000 ist.

4. Verwendung einer Alumoxan-Lösung gemäß einem der vorhergehenden Ansprüche, dadurch gekennzeichnet, daß das Alumoxan Methylalumoxan ist.

5. Homogenes Katalysatorsystem zur Olefinpolymerisation und -copolymerisation, wobei das System umfaßt
(i) einen Metallocen-Katalysator der allgemeinen Formel (Cp)ₘRₙMQₖ, worin jedes Cp gleich oder verschieden und ein Cyclopentadienyl oder ein Cyclopentadienyl, substituiert durch einen oder mehrere Kohlenwasserstoffreste, wie Alkyl-, Alkenyl-, Aryl-, Arylalkyl- oder Alkylarylrest, mit 1 bis 20 Kohlenstoffatomen ist, R eine strukturelle Brücke zwischen zwei Cp-Ringen ist, M ein Übergangsmetall ist, ausgewählt aus den Gruppen 4 oder 5, jedes Q gleich oder verschieden und ein Hydrid oder eine Kohlenwasserstoffgruppe mit 1 bis 20 Kohlenstoffatomen oder eine Alkenylgruppe mit 2 bis 20 Kohlenstoffatomen oder ein Halogen ist, m = 1 bis 3, n = 0 oder 1 und k derart ist, daß die Summe von m+k gleich dem Oxidationszustand von M ist und
(ii) einen Alumoxan-Cokatalysator, wobei das Alumoxan in Form einer Lösung von mindestens 20 Gew.-% vorhanden ist.

6. Homogenes Katalysatorsystem gemäß Anspruch 5, dadurch gekennzeichnet, daß das molare Verhältnis Alumoxan/Katalysator kleiner als 2000 ist.

7. Homogenes Katalysatorsystem nach Anspruch 6, dadurch gekennzeichnet, daß das molare Verhältnis Alumoxan/Katalysator kleiner als 1000 ist.

8. Homogenes Katalysatorsystem gemäß einem der Ansprüche 5, 6 oder 7, dadurch gekennzeichnet, daß das Alumoxan Methylalumoxan ist.

9. Verfahren zum Herstellen eines homogenen Katalysatorsystems zur Olefinpolymerisation und -copolymerisation, wobei das System umfaßt
(i) einen Metallocen-Katalysator der allgemeinen Formel (Cp)ₘRₙMQₖ, worin jedes Cp gleich oder verschieden und ein Cyclopentadienyl oder ein Cyclopentadienyl, substituiert durch einen oder mehrere Kohlenwasserstoffreste, wie Alkyl-, Alkenyl-, Aryl-, Arylalkyl- oder Alkylarylrest, mit 1 bis 20 Kohlenstoffatomen ist, R eine strukturelle Brücke zwischen zwei Cp-Ringen ist, M ein Übergangsmetall ist, ausgewählt aus den Gruppen 4 oder 5, jedes Q gleich oder verschieden und ein Hydrid oder eine Kohlenwasserstoffgruppe mit 1 bis 20 Kohlenstoffatomen oder eine Alkenylgruppe mit 2 bis 20 Kohlenstoffatomen oder ein Halogen ist, m = 1 bis 3, n = 0 oder 1 und k derart ist, daß die Summe von m+k gleich dem Oxidationszustand von M ist und
(ii) einen Alumoxan-Cokatalysator, wobei das Alumoxan in Form einer Lösung von mindestens 20 Gew.-% vorhanden ist.

10. Verfahren nach Anspruch 9, worin das molare Verhältnis Alumoxan/Katalysator kleiner als 2000 ist.

11. Verfahren nach Anspruch 10, worin das molare Verhältnis Alumoxan/Katalysator kleiner als 1000 ist.

12. Verfahren nach einem der Ansprüche 9, 10 oder 11, worin das Alumoxan Methylalumoxan ist.

13. Verfahren zur Polymerisation oder Copolymerisation von Olefinen in Gegenwart eines Katalysatorsystems, umfassend (i) einen Metallocen-Katalysator der allgemeinen Formel (Cp)ₘRₙMQₖ, worin jedes Cp gleich oder verschieden und ein Cyclopentadienyl oder ein Cyclopentadienyl, substituiert durch einen oder mehrere Kohlenwasserstoffreste, wie Alkyl-, Alkenyl-, Aryl-, Arylalkyl- oder Alkylarylrest, mit 1 bis 20 Kohlenstoffatomen ist, R eine strukturelle Brücke zwischen zwei Cp-Ringen ist, M ein Übergangsmetall ist, ausgewählt aus den Gruppen 4 oder 5, jedes Q gleich oder verschieden und ein Hydrid oder eine Kohlenwasserstoffgruppe mit 1 bis 20 Kohlenstoffatomen oder eine Alkenylgruppe mit 2 bis 20 Kohlenstoffatomen oder ein Halogen ist, m = 1 bis 3, n = 0 oder 1 und k derart ist, daß die Summe von m+k gleich dem Oxidationszustand von M ist und (ii) einen Alumoxan-Cokatalysator, dadurch gekennzeichnet, daß das Alumoxan in Form einer Lösung von mindestens 20 Gew.-% vorhanden ist.

14. Verfahren nach Anspruch 13, worin das molare Verhältnis Alumoxan/Katalysator kleiner als 2000 ist.

15. Verfahren nach Anspruch 14, worin das molare Verhältnis Alumoxan/Katalysator kleiner als 1000 ist.

16. Verfahren nach einem der Ansprüche 13, 14 oder 15, worin das Alumoxan Methylalumoxan ist.

17. Verfahren nach einem der Ansprüche 13 bis 16, angewendet auf die Polymerisation von Propylen.

## Revendications

1. Utilisation d'une solution d'alumoxane contenant au moins 20% en poids d'alumoxane comme cocatalyseur pour la polymérisation ou la copolymérisation d'oléfines avec un catalyseur homogène du type d'un métallocène de formule générale (Cp)ₘRₙMQₖ dans laquelle chaque Cp est identique ou différent et représente un groupe cyclopentadiényle ou un groupe cyclopentadiényle substitué par un ou plusieurs radicaux hydrocarbyle tels qu'un radical alkyle, un radical alcényle, un radical aryle, un radical arylalkyle ou un radical alkylaryle contenant de 1 à 20 atomes de carbone, R représente un pont de structure entre deux noyaux Cp, M représente un métal de transition choisi parmi les groupes 4 ou 5, chaque Q est identique ou différent et représente un hydrure ou un groupe hydrocarbyle contenant de 1 à 20 atomes de carbone ou encore un groupe alcényle contenant de 2 à 20 atomes de carbone ou bien un atome d'halogène, m est égal à 1-3, n est égal à 0 ou 1 et k est tel que la somme m+k est égale à l'état d'oxydation de M.

2. Utilisation d'une solution d'alumoxane selon la revendication 1, caractérisée en ce que le rapport molaire alumoxane/catalyseur est inférieur à 2.000.

3. Utilisation d'une solution d'alumoxane selon la revendication 2, caractérisée en ce que le rapport molaire alumoxane/catalyseur est inférieur à 1.000.

4. Utilisation d'une solution d'alumoxane selon l'une quelconque des revendications précédentes, caractérisée en ce que l'alumoxane est le méthylalumoxane.

5. Système de catalyseur homogène pour la polymérisation et la copolymérisation d'oléfines, ledit système comprenant (i) un catalyseur du type d'un métallocène de formule générale (Cp)ₘRₙMQₖ dans laquelle chaque Cp est identique ou différent et représente un groupe cyclopentadiényle ou un groupe cyclopentadiényle substitué par un ou plusieurs radicaux hydrocarbyle tels qu'un radical alkyle, un radical alcényle, un radical aryle, un radical arylalkyle ou un radical alkylaryle contenant de 1 à 20 atomes de carbone, R représente un pont de structure entre deux noyaux Cp, M représente un métal de transition choisi parmi les groupes 4 ou 5, chaque Q est identique ou différent et représente un hydrure ou un groupe hydrocarbyle contenant de 1 à 20 atomes de carbone ou encore un groupe alcényle contenant de 2 à 20 atomes de carbone ou bien un atome d'halogène, m est égal à 1-3, n est égal à 0 ou 1 et k est tel que la somme m+k est égale à l'état d'oxydation de M, et (ii) un cocatalyseur d'alumoxane, ledit alumoxane étant procuré sous la forme d'une solution d'au moins 20% en poids.

6. Système de catalyseur homogène selon la revendication 5, caractérisé en ce que le rapport molaire alumoxane/catalyseur est inférieur à 2.000.

7. Système de catalyseur homogène selon la revendication 6, caractérisé en ce que le rapport molaire alumoxane/catalyseur est inférieur à 1.000.

8. Système de catalyseur homogène selon l'une quelconque des revendications 5, 6 ou 7, caractérisé en ce que l'alumoxane est le méthylalumoxane.

9. Procédé pour préparer un système de catalyseur homogène pour la polymérisation et la copolymérisation d'oléfines, ledit système comprenant (i) un catalyseur du type d'un métallocène de formule générale (Cp)ₘRₙMQₖ dans laquelle chaque Cp est identique ou différent et représente un groupe cyclopentadiényle ou un groupe cyclopentadiényle substitué par un ou plusieurs radicaux hydrocarbyle tels qu'un radical alkyle, un radical alcényle, un radical aryle, un radical arylalkyle ou un radical alkylaryle contenant de 1 à 20 atomes de carbone, R représente un pont de structure entre deux noyaux Cp, M représente un métal de transition choisi parmi les groupes 4 ou 5, chaque Q est identique ou différent et représente un hydrure ou un groupe hydrocarbyle contenant de 1 à 20 atomes de carbone ou encore un groupe alcényle contenant de 2 à 20 atomes de carbone ou bien un atome d'halogène, m est égal à 1-3, n est égal à 0 ou 1 et k est tel que la somme m+k est égale à l'état d'oxydation de M, et (ii) un cocatalyseur d'alumoxane, caractérisé en ce que ledit alumoxane étant procuré sous la forme d'une solution d'au moins 20% en poids.

10. Procédé selon la revendication 9, dans lequel le rapport molaire alumoxane/catalyseur est inférieur à 2.000.

11. Procédé selon la revendication 10, dans lequel le rapport molaire alumoxane/catalyseur est inférieur à 1.000.

12. Procédé selon l'une quelconque des revendications 9, 10 ou 11, dans lequel l'alumoxane est le méthylalumoxane.

13. Procédé pour la polymérisation ou la copolymérisation d'oléfines en présence d'un système de catalyseur comprenant (i) un catalyseur du type d'un métallocène de formule générale (Cp)ₘRₙMQₖ dans laquelle chaque Cp est identique ou différent et représente un groupe cyclopentadiényle ou un groupe cyclopentadiényle substitué par un ou plusieurs radicaux hydrocarbyle tels qu'un radical alkyle, un radical alcényle, un radical aryle, un radical arylalkyle ou un radical alkylaryle contenant de 1 à 20 atomes de carbone, R représente un pont de structure entre deux noyaux Cp, M représente un métal de transition choisi parmi les groupes 4 ou 5, chaque Q est identique ou différent et représente un hydrure ou un groupe hydrocarbyle contenant de 1 à 20 atomes de carbone ou encore un groupe alcényle contenant de 2 à 20 atomes de carbone ou bien un atome d'halogène, m est égal à 1-3, n est égal à 0 ou 1 et k est tel que la somme m+k est égale à l'état d'oxydation de M, et (ii) un cocatalyseur d'alumoxane, caractérisé en ce que ledit alumoxane étant procuré sous la forme d'une solution d'au moins 20% en poids.

14. Procédé selon la revendication 13, dans lequel le rapport molaire alumoxane/catalyseur est inférieur à 2.000.

15. Procédé selon la revendication 14, dans lequel le rapport molaire alumoxane/catalyseur est inférieur à 1.000.

16. Procédé selon l'une quelconque des revendications 13, 14 ou 15, dans lequel l'alumoxane est le méthylalumoxane.

17. Procédé selon l'une quelconque des revendications 13 à 16, lorsqu'on l'applique à la polymérisation du propylène.
